# EUROPEAN PATENT APPLICATION

(11) **EP 4 703 272 A1**
(43) Date of publication of application: **04.03.2026**
(21) Application number: 25198541.2
(22) Date of filing: 27.08.2025
(51) Int. Cl.: B64D 33/08, B64D 33/10, B64D 37/34

(54) **THERMAL MANAGEMENT SYSTEM FOR OPEN ROTOR AIRCRAFT PROPULSION SYSTEM**

(30) Priority: 27.08.2024 US 202418816839
(71) Applicant: RTX Corporation, Farmington, CT 06032 (US)
(72) Inventor: BREAULT, Andrew, Bolton, 06043 (US); MORTON, Jeffrey, Manchester, 06040 (US); SOBANSKI, Jon, Glastonbury, 06033 (US)
(74) Representative: Dehns

(57) **Abstract**

An assembly for an aircraft includes an airframe (22), an aircraft propulsion system (24A,24B) mounted to the airframe, and a thermal management system (26A,26B). The aircraft propulsion system includes an open propulsor rotor and a turbine engine core configured to drive rotation of the open propulsor rotor. The thermal management system includes a fluid circuit (114) and a fluid circuit working fluid within the fluid circuit (114). The fluid circuit (114) includes a propulsion system heat exchanger (118A ... 118D) and an airframe heat exchanger (120). The propulsion system heat exchanger is configured to transfer heat energy out of a propulsion system working fluid within the aircraft propulsion system (24A,24B) into the fluid circuit working fluid. The airframe heat exchanger (120) is configured to transfer at least some of the heat energy out of the fluid circuit working fluid into an airframe working fluid within the aircraft airframe (22).

## Description

### BACKGROUND OF THE DISCLOSURE

### 1. Technical Field

This invention relates generally to an aircraft and, more particularly, to a thermal management system for an aircraft propulsion system.

### 2. Background Information

An aircraft propulsion system may include a thermal management system for rejecting heat energy from one or more sub-systems of the aircraft propulsion system. Various types and configurations of thermal management systems are known in the art. While these known thermal management systems have various benefits, there is still room in the art for improvement.

### SUMMARY OF THE INVENTION

According to an aspect of the present invention, an assembly is provided for an aircraft. This aircraft assembly includes an airframe, an aircraft propulsion system and a thermal management system. The aircraft propulsion system is mounted to the airframe. The aircraft propulsion system includes an open propulsor rotor and a turbine engine core configured to drive rotation of the open propulsor rotor about an axis. The thermal management system includes a fluid circuit and a fluid circuit working fluid within the fluid circuit. The fluid circuit includes a propulsion system heat exchanger and an airframe heat exchanger. The propulsion system heat exchanger may be arranged with the aircraft propulsion system (for example within the aircraft propulsion system) and is configured to transfer heat energy out of a propulsion system working fluid within the aircraft propulsion system into the fluid circuit working fluid. The airframe heat exchanger may be arranged with the aircraft airframe (for example within the aircraft airframe) and is configured to transfer at least some of the heat energy out of the fluid circuit working fluid into an airframe working fluid within the aircraft airframe.

According to another aspect of the present invention, another assembly is provided for an aircraft. This aircraft assembly includes an airframe, an aircraft propulsion system and a thermal management system. The aircraft propulsion system is mounted to the airframe. The aircraft propulsion system includes a propulsor rotor and a turbine engine core configured to drive rotation of the propulsor rotor about an axis. The thermal management system includes a fluid circuit and a fluid circuit working fluid within the fluid circuit. The fluid circuit includes a first propulsion system heat exchanger, a second propulsion system heat exchanger and an airframe heat exchanger. The first propulsion system heat exchanger may be arranged with the aircraft propulsion system (for example within the aircraft propulsion system) and is configured to transfer heat energy out of a first propulsion system working fluid into the fluid circuit working fluid. The first propulsion system working fluid services a first component of the aircraft propulsion system. The second propulsion system heat exchanger may be arranged with the aircraft propulsion system (for example within the aircraft propulsion system) and is configured to transfer additional heat energy out of a second propulsion system working fluid into the fluid circuit working fluid. The second propulsion system working fluid services a second component of the aircraft propulsion system. The airframe heat exchanger may be arranged with the aircraft airframe (for example within the aircraft airframe) and is configured to transfer at least some of the heat energy out of the fluid circuit working fluid to an airframe working fluid within the aircraft airframe.

According to still another aspect of the present invention, another assembly is provided for an aircraft. This aircraft assembly includes an airframe, an aircraft propulsion system and a thermal management system. The aircraft propulsion system is mounted to the airframe. The aircraft propulsion system includes a propulsor rotor and a turbine engine core configured to drive rotation of the propulsor rotor about an axis. The thermal management system includes a fluid circuit and a fluid circuit working fluid within the fluid circuit. The fluid circuit includes a propulsion system heat exchanger and an airframe heat exchanger. The propulsion system heat exchanger may be arranged with the aircraft propulsion system (for example within the aircraft propulsion system) and is configured to transfer heat energy out of a first propulsion system working fluid and a second propulsion system working fluid into the fluid circuit working fluid. The first propulsion system working fluid services a first component of the aircraft propulsion system. The second propulsion system working fluid services a second component of the aircraft propulsion system. The airframe heat exchanger may be arranged with the aircraft airframe (for example within the aircraft airframe) and is configured to transfer at least some of the heat energy out of the fluid circuit working fluid to an airframe working fluid within the aircraft airframe.

Optionally, and in accordance with any of the above, the fluid circuit working fluid may be a non-flammable fluid.

Optionally, and in accordance with any of the above, the propulsion system working fluid may be a flammable fluid.

Optionally, and in accordance with any of the above, the airframe working fluid may be a flammable fluid.

Optionally, and in accordance with any of the above, the fluid circuit working fluid may be or otherwise include a coolant.

Optionally, and in accordance with any of the above, the fluid circuit working fluid may be or otherwise include a lubricant.

Optionally, and in accordance with any of the above, the propulsion system working fluid may be or otherwise include a lubricant. The propulsion system may also include a lubrication system configured to flow the lubricant.

Optionally, and in accordance with any of the above, the propulsion system working fluid may be or otherwise include an actuation fluid. The propulsion system may also include an actuation system configured to flow the actuation fluid. The actuation system may include a fueldraulic actuator, a pneumatic actuator or a hydraulic actuator adapted to receive the actuation fluid.

Optionally, and in accordance with any of the above, the propulsion system working fluid may be or otherwise include buffer air. The propulsion system may also include a buffer air system configured to flow the buffer air.

Optionally, and in accordance with any of the above, the airframe working fluid may be or otherwise include air. The airframe may include a duct configured to direct ambient air received from outside of the airframe across the airframe heat exchanger.

Optionally, and in accordance with any of the above, the airframe working fluid may be or otherwise include fuel. The airframe may include a fuel reservoir configured to contain the fuel. The airframe heat exchanger may be thermally coupled to and/or disposed within the fuel reservoir.

Optionally, and in accordance with any of the above, the airframe may include a fuel reservoir configured to contain fuel. The fluid circuit may be a first fluid circuit. The fluid circuit working fluid may be a first fluid circuit working fluid. The thermal management system may also include an airframe fluid circuit and the airframe working fluid within the airframe fluid circuit. The airframe fluid circuit may include the airframe heat exchanger and a fuel heat exchanger. The fuel heat exchanger may be thermally coupled to and/or disposed within the fuel reservoir. The fuel heat exchanger may be configured to transfer at least some of the heat energy out of the airframe working fluid into the fuel within the fuel reservoir.

Optionally, and in accordance with any of the above, the airframe may include an aircraft wing. The aircraft propulsion system may be mounted to the aircraft wing. The airframe heat exchanger may be arranged with the aircraft wing (for example within the aircraft wing).

Optionally, and in accordance with any of the above, the aircraft wing may extend between a leading edge and a trailing edge. The open propulsor rotor may be disposed upstream of the leading edge.

Optionally, and in accordance with any of the above, the propulsion system heat exchanger may be a first propulsion system heat exchanger. The propulsion system working fluid may be a first propulsion system working fluid. The fluid circuit may also include a second propulsion system heat exchanger that may be arranged with the aircraft propulsion system (for example within the aircraft propulsion system). The second propulsion system heat exchanger may be configured to transfer additional heat energy out of a second propulsion system working fluid within the aircraft propulsion system into the fluid circuit working fluid. Each of the first propulsion system working fluid and second propulsion system working fluid may comprise any of the above-mentioned propulsion system working fluids (e.g. flammable fluid, lubricant, actuation fluid and buffer air) in any combination (i.e. the first and second propulsion system working fluids may be the same type of fluid or different types of fluid to each other).

Optionally, and in accordance with any of the above, the propulsion system working fluid may be a first propulsion system working fluid. The propulsion system heat exchanger may be configured to transfer additional heat energy out of a second propulsion system working fluid within the aircraft propulsion system into the fluid circuit working fluid. Each of the first propulsion system working fluid and second propulsion system working fluid may comprise any of the above-mentioned propulsion system working fluids (e.g. flammable fluid, lubricant, actuation fluid and buffer air) in any combination (i.e. the first and second propulsion system working fluids may be the same type of fluid or different types of fluid to each other).

Optionally, and in accordance with any of the above, the aircraft propulsion system may extend axially between a forward, upstream end and an aft, downstream end. The open propulsor rotor may be disposed axially between the forward, upstream end and the turbine engine core.

Optionally, and in accordance with any of the above, the engine core may include a flowpath, a compressor section, a combustor section, a turbine section and a rotating structure. The flowpath may extend through the compressor section, the combustor section and the turbine section from an inlet into the flowpath to an exhaust from the flowpath. The rotating structure may include a compressor rotor in the compressor section and a turbine rotor in the turbine section. The rotating structure may be configured to rotate about the axis and drive rotation of the open propulsor rotor.

Optionally, and in accordance with any of the above, the aircraft propulsion system may also include a geartrain and a lubrication system. The geartrain may be disposed axially between and may operatively couple the rotating structure and the open propulsor rotor. The lubrication system may be configured to lubricate the geartrain using the propulsion system working fluid.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft.
FIG. 2 is a schematic sectional illustration of a propulsion system for the aircraft.
FIG. 3 is a schematic illustration of a portion of the aircraft with a thermal management system for the propulsion system.
FIG. 4 is a schematic illustration of a portion of the thermal management system with another propulsion system heat exchanger arrangement.
FIGS. 5 and 6 are schematic illustrations of portions of the thermal management system with various fuel heat exchanger arrangements.

### DETAILED DESCRIPTION

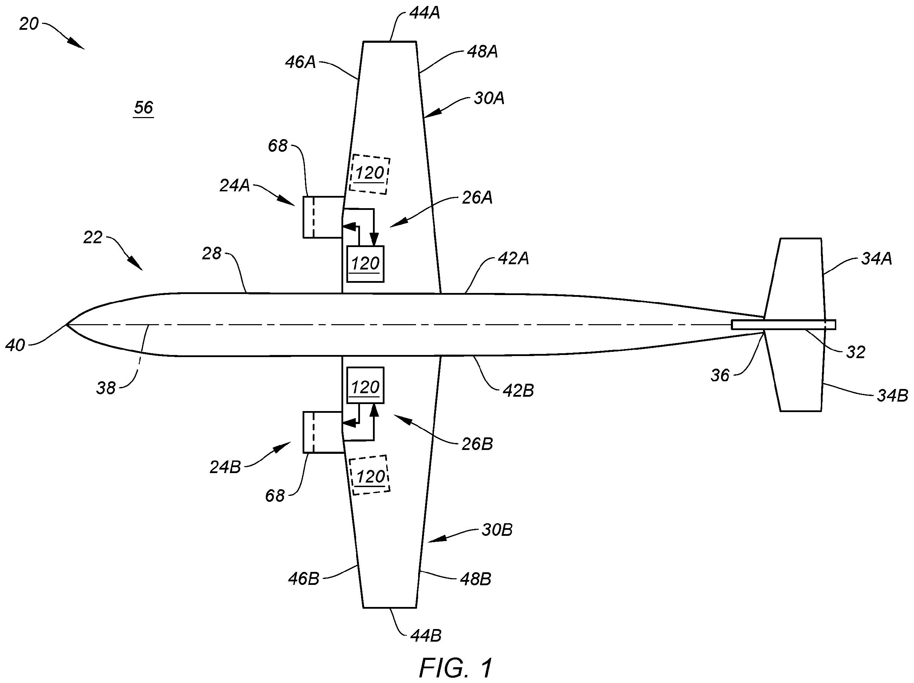

FIG. 1 is a schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22, one or more aircraft propulsion systems 24A and 24B (generally referred to as "24") and one or more thermal management systems 26A and 26B (generally referred to as "26"). Briefly, for ease of description, the aircraft 20 is described below with one thermal management system 26 dedicated to each aircraft propulsion system 24. It is contemplated, however, the aircraft 20 may alternatively include a single thermal management system 26 that services multiple of the aircraft propulsion systems 24.

The aircraft airframe 22 of FIG. 1 includes an aircraft fuselage 28 and one or more aircraft wings 30A and 30B (generally referred to as "30"). This aircraft airframe 22 may also include one or more aircraft stabilizers, such as at least one vertical stabilizer 32 and one or more horizontal stabilizers 34A and 34B arranged at (e.g., on, adjacent or proximate) an aft, downstream tail end 36 of the aircraft fuselage 28. However, in other embodiments, it is contemplated one or more of the aircraft stabilizers 32, 34A, 34B may be omitted where, for example, the aircraft 20 is alternatively configured as a blended wing aircraft.

The aircraft fuselage 28 extends longitudinally along a longitudinal centerline 38 of the aircraft airframe 22 and its aircraft fuselage 28 from a forward, upstream nose end 40 of the aircraft airframe 22 and its aircraft fuselage 28 to the fuselage tail end 36. The aircraft fuselage 28 extends laterally between and to opposing lateral sides 42A and 42B (generally referred to as "42") of the aircraft fuselage 28.

The aircraft wings 30A and 30B are arranged to the opposing lateral sides 42A and 42B of the aircraft fuselage 28. The first aircraft wing 30A of FIG. 1, for example, is connected to the aircraft fuselage 28 at the fuselage first side 42A. The second aircraft wing 30B is connected to the aircraft fuselage 28 at the fuselage second side 42B. The aircraft fuselage 28 of FIG. 1 is thereby located laterally between the first aircraft wing 30A and the second aircraft wing 30B. Each of these aircraft wings 30A, 30B projects spanwise out from the aircraft fuselage 28 to a tip 44A, 44B of the respective aircraft wing 30A, 30B. Each of the aircraft wings 30A, 30B extends longitudinally between and to a leading edge 46A, 46B of the respective aircraft wing 30 and a trailing edge 48A, 48B of the respective aircraft wing 30.

The aircraft propulsion systems 24A, 24B of FIG. 1 are arranged to the opposing lateral sides 42A, 42B of the aircraft fuselage 28. The first aircraft propulsion system 24A of FIG. 1, for example, is mounted to the first aircraft wing 30A. The second aircraft propulsion system 24B is mounted to the second aircraft wing 30B. The aircraft fuselage 28 of FIG. 1 is thereby located laterally between the first aircraft propulsion system 24A and the second aircraft propulsion system 24B. The present invention, however, is not limited to such an exemplary arrangement.

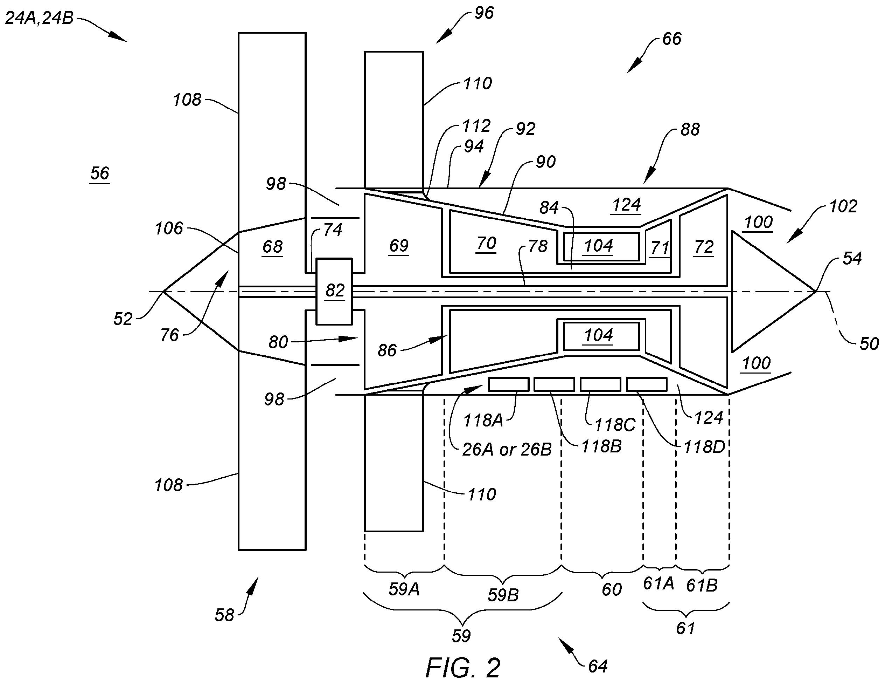

Referring to FIG. 2, each aircraft propulsion system 24 extends axially along an axis 50 between a forward, upstream end 52 of the respective aircraft propulsion system 24 and an aft, downstream end 54 of the respective aircraft propulsion system 24. The axis 50 may be a centerline axis of the respective aircraft propulsion system 24 and/or one or more of its members. The axis 50 may also or alternatively be a rotational axis of one or more members of the respective aircraft propulsion system 24.

The aircraft propulsion system 24 of FIG. 2 is configured as an open rotor propulsion system; e.g., a single rotor and swirl recovery vane (SRV) open rotor propulsion system. Here, the term "open" may describe a propulsion system section and/or a propulsion system component which is open to an environment 56 (e.g., an ambient environment) external to the respective aircraft propulsion system 24 and, more generally, the aircraft 20 (see FIG. 1). The aircraft propulsion system 24 of FIG. 2, for example, includes an open propulsion section 58, a compressor section 59, a combustor section 60 and a turbine section 61. The compressor section 59 of FIG. 2 includes a low pressure compressor (LPC) section 59A and a high pressure compressor (HPC) section 59B. The turbine section 61 of FIG. 2 includes a high pressure turbine (HPT) section 61A and a low pressure turbine (LPT) section 61B. At least (or only) the LPC section 59A, the HPC section 59B, the combustor section 60, the HPT section 61A and the LPT section 61B collectively form a turbine engine core 64 (e.g., a gas generator) of a gas turbine engine 66.

The propulsion section 58 includes a bladed propulsor rotor 68. The propulsor rotor 68 of FIG. 2 is configured as an open rotor (e.g., an un-ducted rotor) which projects radially into and is exposed to the external environment 56. The LPC section 59A includes a low pressure compressor (LPC) rotor 69. The HPC section 59B includes a high pressure compressor (HPC) rotor 70. The HPT section 61A includes a high pressure turbine (HPT) rotor 71. The LPT section 61B includes a low pressure turbine (LPT) rotor 72. Each of the bladed rotors 69-72 of FIG. 2 is configured as a ducted rotor internal within the respective aircraft propulsion system 24 and outside of the external environment 56.

The propulsor rotor 68 of FIG. 2 is connected to a propulsor shaft 74. At least (or only) the propulsor rotor 68 and the propulsor shaft 74 collectively form a propulsor rotating structure 76. This propulsor rotating structure 76 of FIG. 2 and its members 68 and 74 are rotatable about the axis 50 of the respective aircraft propulsion system 24.

The LPC rotor 69 is coupled to and rotatable with the LPT rotor 72. The LPC rotor 69 of FIG. 2, for example, is connected to the LPT rotor 72 through a low speed shaft 78. At least (or only) the LPC rotor 69, the LPT rotor 72 and the low speed shaft 78 collectively form a low speed rotating structure 80; e.g., a low speed spool of the engine core 64. This low speed rotating structure 80 of FIG. 2 and its members 69, 72 and 78 are rotatable about the axis 50 of the respective aircraft propulsion system 24. It is contemplated, however, that the low speed rotating structure 80 may alternatively be rotatable about another axis which is (e.g., laterally and/or angularly) offset from the axis 50 of the respective aircraft propulsion system 24. The low speed rotating structure 80 of FIG. 2 is also coupled to the propulsor rotating structure 76. The low speed rotating structure 80 of FIG. 2, for example, is connected to the propulsor rotating structure 76 through a geartrain 82. With this arrangement, the low speed rotating structure 80 and its LPT rotor 72 may rotate at a different (e.g., faster) rotational velocity than the propulsor rotating structure 76 and its propulsor rotor 68.

The HPC rotor 70 is coupled to and rotatable with the HPT rotor 71. The HPC rotor 70 of FIG. 2, for example, is connected to the HPT rotor 71 through a high speed shaft 84. At least (or only) the HPC rotor 70, the HPT rotor 71 and the high speed shaft 84 collectively form a high speed rotating structure 86; e.g., a high speed spool of the engine core 64. This high speed rotating structure 86 of FIG. 2 and its members 70, 71 and 84 are rotatable about the axis 50 of the respective aircraft propulsion system 24. It is contemplated, however, that the high speed rotating structure 86 may alternatively be rotatable about another axis which is (e.g., laterally and/or angularly) offset from the axis 50 of the respective aircraft propulsion system 24.

The engine sections 59A-61B may (or may not) be arranged sequentially along the axis 50 of the respective aircraft propulsion system 24 and are housed within a stationary housing 88 of the respective aircraft propulsion system 24. This propulsion system housing 88 includes a core case 90 (e.g., a gas generator case) and a nacelle 92. The core case 90 houses one or more of the propulsion system sections 59A-61B; e.g., the engine core 64. The core case 90 of FIG. 2, for example, extends axially along (e.g., axially overlaps) and extends circumferentially about (e.g., circumscribes) the engine sections 59A-61B and their respective bladed rotors 69-72. The core case 90 may also house the geartrain 82. The nacelle 92 houses and provides an aerodynamic cover over the core case 90. An exterior wall 94 of the nacelle 92 of FIG. 2, for example, is disposed radially outboard of, extends axially along (e.g., axially overlaps) and extends circumferentially about (e.g., circumscribes) the engine core 64 and its core case 90. With this arrangement, the bladed rotors 69-72 are disposed within the propulsion system housing 88. The propulsor rotor 68 is disposed at least partially (or completely) outside of the propulsion system housing 88.

During operation of each aircraft propulsion system 24, ambient air within the external environment 56 is propelled by the propulsor rotor 68 in an aft, downstream direction towards the propulsion system downstream end 54. A major portion (e.g., more than 50%) of this air bypasses the engine core 64 to provide forward thrust while a minor portion (e.g., less than 50%) of the air flows into the engine core 64. An outer stream of the air propelled by the propulsor rotor 68, for example, flows axially across a guide vane structure 96 of the propulsion section 58 and outside of the propulsion system housing 88 (along the nacelle wall 94). The guide vane structure 96 is configured to condition (e.g., straighten out) the air propelled by the propulsor rotor 68, for example, to remove or reduce circumferential swirl and thereby enhance the forward thrust. An inner stream of the air propelled by the propulsor rotor 68 flows through an airflow inlet 98 of a core flowpath 100 into the aircraft propulsion system 24 and its engine core 64. The core flowpath 100 extends sequentially through the LPC section 59A, the HPC section 59B, the combustor section 60, the HPT section 61A and the LPT section 61B from the core inlet 98 to a combustion products exhaust 102 from the core flowpath 100 into the external environment 56. The air entering the core flowpath 100 may be referred to as "core air".

The core air is compressed by the LPC rotor 69 and the HPC rotor 70 and directed into a combustion chamber 104 (e.g., an annular combustion chamber) of a combustor (e.g., an annular combustor) in the combustor section 60. Fuel is injected into the combustion chamber 104 by one or more fuel injectors and mixed with the compressed core air to provide a fuel-air mixture. This fuel-air mixture is ignited and combustion products thereof flow through and sequentially drive rotation of the HPT rotor 71 and the LPT rotor 72. The rotation of the HPT rotor 71 and the LPT rotor 72 respectively drive rotation of the HPC rotor 70 and the LPC rotor 69 and, thus, compression of the air received from the core inlet 98. The rotation of the LPT rotor 72 also drives rotation of the propulsor rotor 68 through the geartrain 82. The rotation of the propulsor rotor 68, in turn, propels the ambient air within the external environment 56 in the aft, downstream direction. With this arrangement, the engine core 64 powers operation of (e.g., drives rotation of) the propulsor rotor 68 during aircraft propulsion system operation.

The propulsor rotor 68 of FIG. 2 includes a propulsor rotor base 106 (e.g., a disk or a hub) and a plurality of open propulsor blades 108 (e.g., airfoils). The propulsor blades 108 are arranged and may be equispaced circumferentially about the rotor base 106 and the axis 50 of the respective aircraft propulsion system 24 in an array; e.g., a circular array. Each of the propulsor blades 108 is connected to (e.g., formed integral with or otherwise attached to) the rotor base 106. Each of the propulsor blades 108 projects spanwise along a span line of the respective propulsor blade 108 (e.g., radially relative to the respective axis 50) out from an exterior surface of the rotor base 106, into the external environment 56, to an unshrouded, distal tip of the respective propulsor blade 108. Each propulsor blade 108 is thereby configured as an un-ducted and unshrouded propulsor blade which is exposed to (e.g., disposed in) the surrounding external environment 56.

The guide vane structure 96 of FIG. 2 includes a plurality of open exit guide vanes 110 (e.g., airfoils) that are arranged and may be equispaced circumferentially about the axis 50 of the respective aircraft propulsion system 24 in an array; e.g., a circular array. This guide vane structure 96 and its guide vanes 110 are arranged axially next to (e.g., adjacent) the propulsor rotor 68 and its propulsor blades 108. The guide vane structure 96 and its guide vanes 110 of FIG. 2, for example, are arranged downstream of the propulsor rotor 68 and its propulsor blades 108, without (e.g., any) other elements axially therebetween to obstruct, turn and/or otherwise influence the air propelled by the propulsor rotor 68 to the guide vane structure 96 for example. Each of the guide vanes 110 of FIG. 2 is coupled to a support structure 112 of the propulsion system housing 88. This support structure 112 may be a support frame, a case or another fixed structure of the propulsion system housing 88. Each of the guide vanes 110 projects spanwise along a span line of the respective guide vane 110 (e.g., radially relative to the respective axis 50) out from an exterior surface of the propulsion system housing 88, into the external environment 56, to an unshrouded, distal tip of the respective guide vane 110. Each guide vane 110 is thereby configured as an un-ducted and unshrouded guide vane which is exposed to (e.g., disposed in) the surrounding external environment 56.

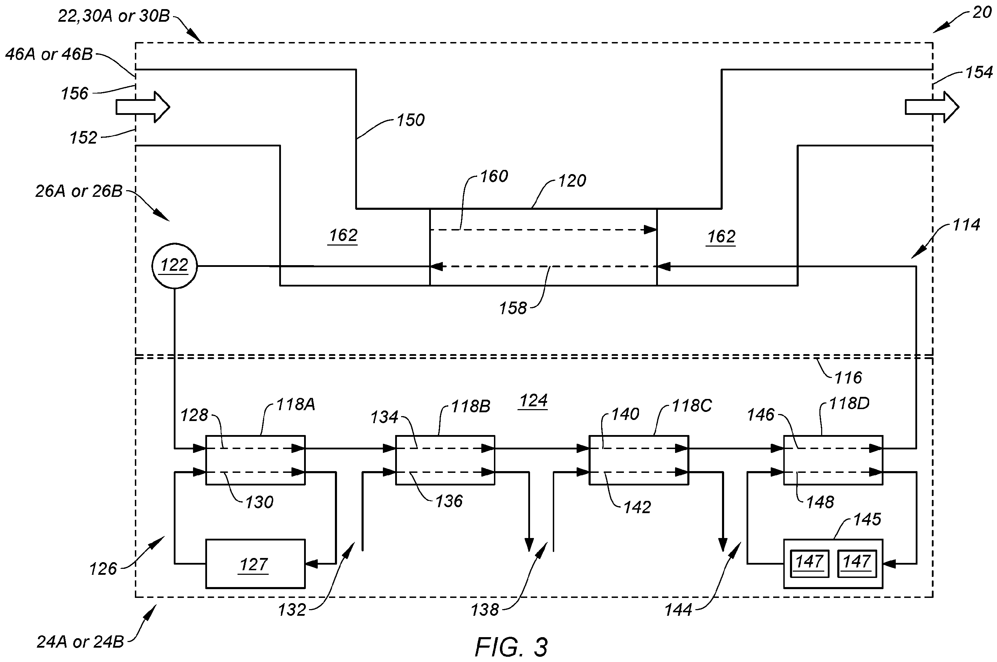

During propulsion system operation, various sub-systems and components within each aircraft propulsion system 24 generate heat energy. Referring to FIG. 3, the thermal management system 26 is configured to remove at least some of the heat energy from the respective aircraft propulsion system 24. The thermal management system 26 of FIG. 3, for example, includes a closed-loop thermal management system (TMS) fluid circuit 114 and a fluid circuit (FC) working fluid which is circulated through the TMS fluid circuit 114. Since the TMS fluid circuit 114 crosses a firewall 116 between the respective aircraft propulsion system 24 and the aircraft airframe 22, the FC working fluid may be selected as a non-flammable fluid and, more particularly, a non-flammable heat exchange liquid. The FC working fluid, for example, may be a coolant such as a mixture of polyglycol and water or a non-flammable refrigerant. It is contemplated, however, the FC working fluid may alternatively be a flammable heat exchanger liquid in select other applications. The FC working fluid, for example, may be a lubricant (e.g., oil) or a flammable refrigerant. However, for ease of description, the FC working fluid may be generally referred to herein as the non-flammable fluid. Alternative examples of the FC working fluid include, but are not limited to, super critical CO₂, ammonia-based coolant, ethylene glycol (EG), propylene glycol (PG), or propylene glycol with water (PGW), or other suitable coolant fluid alternatives to oil.

The TMS fluid circuit 114 of FIG. 3 includes one or more propulsion system heat exchangers 118A-D (generally referred to as "118") and at least (or only) one airframe heat exchanger 120. This TMS fluid circuit 114 also includes a fluid flow regulator 122.

The propulsion system heat exchangers 118A-D may be arranged in a serial array along the TMS fluid circuit 114. The TMS fluid circuit 114 of FIG. 3, for example, extends serially and sequentially (e.g., in a downstream direction) through the propulsion system heat exchangers 118A-D. Each of the propulsion system heat exchangers 118 is arranged with the respective aircraft propulsion system 24. Each of the propulsion system heat exchangers 118, for example, may be disposed in a compartment 124 (e.g., a cavity, an interior volume, etc.) between the nacelle 92 and the core case 90 (see FIG. 2). With this arrangement, each of the propulsion system heat exchangers 118 may be configured to service a different sub-system (or multiple sub-systems) of the respective aircraft propulsion system 24, which propulsion system sub-system may be partially or completely contained within the respective aircraft propulsion system 24 and its propulsion system housing 88 (see FIG. 2). The present invention, however, is not limited to such an arrangement. For example, one or more or all of the propulsion system heat exchangers 118 may alternatively be located in a pylon mounting the respective aircraft propulsion system 24 to the aircraft airframe 22 (see FIG. 1).

The first propulsion system heat exchanger 118A may be configured to service a fluid system 126 - one of the propulsion system sub-systems - for an electrical generator 127 that is mechanically powered by the turbine engine 66 and its engine core 64 (see FIG. 2). Briefly, this generator fluid system 126 may be a lubrication system and/or a cooling system for the electrical generator 127. The first propulsion system heat exchanger 118A is thermally coupled with the generator fluid system 126. The first propulsion system heat exchanger 118A of FIG. 3, for example, includes a plurality of fluidly discrete internal passages 128 and 130. The first passage 128 of FIG. 3 is part of and is thereby fluidly coupled with the TMS fluid circuit 114. The second passage 130 of FIG. 3 is part of and is thereby fluidly coupled with the generator fluid system 126. These internal passages 128 and 130 may be arranged to provide the first propulsion system heat exchanger 118A with a parallel flow configuration, a cross-flow configuration, a counterflow configuration, or a hybrid configuration including any two or more of the foregoing configurations. With this arrangement, the first propulsion system heat exchanger 118A is configured to exchange heat energy between the FC working fluid flowing through the first passage 128 and a generator fluid system (GFS) working fluid flowing through the second passage 130. For example, during typical propulsion system operation, the first propulsion system heat exchanger 118A may transfer heat energy generated by the electrical generator 127 out of the GFS working fluid and into the FC working fluid. The thermal management system 26 of FIG. 3 and its members may therefore be operated to cool the GFS working fluid and, for example, the electrical generator 127 through the GFS working fluid. Examples of the GFS working fluid include, but are not limited to, a lubricant (e.g., oil) or a refrigerant.

The second propulsion system heat exchanger 118B may be configured to service a fluid system 132 - one of the propulsion system sub-systems - for the turbine engine 66 and its engine core 64 and/or its geartrain 82 (see FIG. 2). Briefly, this engine fluid system 132 may be a lubrication system and/or a cooling system for the turbine engine 66 and its members 64 and 82. The second propulsion system heat exchanger 118B is thermally coupled with the engine fluid system 132. The second propulsion system heat exchanger 118B of FIG. 3, for example, includes a plurality of fluidly discrete internal passages 134 and 136. The first passage 134 of FIG. 3 is part of and is thereby fluidly coupled with the TMS fluid circuit 114. The second passage 136 of FIG. 3 is part of and is thereby fluidly coupled with the engine fluid system 132. These internal passages 134 and 136 may be arranged to provide the second propulsion system heat exchanger 118B with a parallel flow configuration, a cross-flow configuration, a counterflow configuration, or a hybrid configuration including any two or more of the foregoing configurations. With this arrangement, the second propulsion system heat exchanger 118B is configured to exchange heat energy between the FC working fluid flowing through the first passage 134 and an engine fluid system (EFS) working fluid flowing through the second passage 136. For example, during typical propulsion system operation, the second propulsion system heat exchanger 118B may transfer heat energy generated by the turbine engine 66 and its members 64 and 82 out of the EFS working fluid and into the FC working fluid. The thermal management system 26 of FIG. 3 and its members may therefore be operated to cool the EFS working fluid and thereby the turbine engine 66 and its members 64 and 82 through the EFS working fluid. Examples of the EFS working fluid include, but are not limited to, a lubricant (e.g., oil) or a refrigerant.

The third propulsion system heat exchanger 118C may be configured to service a buffer air system 138 - one of the propulsion system sub-systems - for the turbine engine 66 and its engine core 64 (see FIG. 2). The third propulsion system heat exchanger 118C is thermally coupled with the buffer air system 138. The third propulsion system heat exchanger 118C of FIG. 3, for example, includes a plurality of fluidly discrete internal passages 140 and 142. The first passage 140 of FIG. 3 is part of and is thereby fluidly coupled with the TMS fluid circuit 114. The second passage 142 of FIG. 3 is part of and is thereby fluidly coupled with the buffer air system 138. These internal passages 140 and 142 may be arranged to provide the third propulsion system heat exchanger 118C with a parallel flow configuration, a cross-flow configuration, a counterflow configuration, or a hybrid configuration including any two or more of the foregoing configurations. With this arrangement, the third propulsion system heat exchanger 118C is configured to exchange heat energy between the FC working fluid flowing through the first passage 140 and buffer air flowing through the second passage 142. For example, during typical propulsion system operation, the third propulsion system heat exchanger 118C may transfer heat energy generated by the turbine engine 66 and its engine core 64 out of the buffer air and into the FC working fluid. The thermal management system 26 of FIG. 3 and its members may therefore be operated to cool the buffer air.

The fourth propulsion system heat exchanger 118D may be configured to service an auxiliary fluid system 144 - one of the propulsion system sub-systems - for the turbine engine 66 and its engine core 64 (see FIG. 2). Briefly, this auxiliary fluid system 144 may be a lubrication system and/or a cooling system for one or more auxiliary engine systems; e.g., an actuation system 145 with one or more actuators 147 (e.g., hydraulic, fueldraulic or pneumatic actuators), a tip clearance control system, etc. The fourth propulsion system heat exchanger 118D is thermally coupled with the auxiliary fluid system 144. The fourth propulsion system heat exchanger 118D of FIG. 3, for example, includes a plurality of fluidly discrete internal passages 146 and 148. The first passage 146 of FIG. 3 is part of and is thereby fluidly coupled with the TMS fluid circuit 114. The second passage 148 of FIG. 3 is part of and is thereby fluidly coupled with the auxiliary fluid system 144. These internal passages 146 and 148 may be arranged to provide the fourth propulsion system heat exchanger 118D with a parallel flow configuration, a cross-flow configuration, a counterflow configuration, or a hybrid configuration including any two or more of the foregoing configurations. With this arrangement, the fourth propulsion system heat exchanger 118D is configured to exchange heat energy between the FC working fluid flowing through the first passage 146 and an auxiliary fluid system (AFS) working fluid flowing through the second passage 148. For example, during typical propulsion system operation, the fourth propulsion system heat exchanger 118D may transfer heat energy generated by the actuation system 145 and transferred by the auxiliary fluid system 144 out of the AFS working fluid and into the FC working fluid. The thermal management system 26 of FIG. 3 and its members may therefore be operated to cool the AFS working fluid. Examples of the AFS working fluid include, but are not limited to, a lubricant (e.g., oil), a refrigerant, fuel, compressed air, etc.

The airframe heat exchanger 120 is arranged remote from the respective aircraft propulsion system 24 with the aircraft airframe 22. The airframe heat exchanger 120, for example, may be arranged with the aircraft wing 30 to which the respective aircraft propulsion system 24 is mounted (see also FIG. 1). In particular, the airframe heat exchanger 120 of FIG. 3 is disposed within an airframe duct 150. This airframe duct 150 of FIG. 3 extends within the respective aircraft wing 30 (or another component of the aircraft airframe 22) from an airflow inlet 152 into the airframe duct 150 to an airflow outlet 154 from the airframe duct 150. The duct inlet 152 may be formed by a perforated skin 156 of the respective aircraft wing 30 (or a scoop) located, for example, at or towards the wing leading edge 46. With this arrangement, the ambient air from the external environment 56 outside of the aircraft 20 may enter the airframe duct 150 through the duct inlet 152 may pass through and/or around the airframe heat exchanger 120 as that air flows towards the duct outlet 154.

The airframe heat exchanger 120 of FIG. 3 includes a plurality of fluidly discrete internal passages 158 and 160. The first passage 158 of FIG. 3 is part of and is thereby fluidly coupled with the TMS fluid circuit 114. The second passage 160 of FIG. 3 is fluidly coupled inline with an internal passage 162 of the airframe duct 150. These internal passages 158 and 160 may be arranged to provide the airframe heat exchanger 120 with a parallel flow configuration, a cross-flow configuration, a counterflow configuration, or a hybrid configuration including any two or more of the foregoing configurations. With this arrangement, the airframe heat exchanger 120 is configured to exchange heat energy between the FC working fluid flowing through the first passage 158 and the ambient air (e.g., an airframe working fluid) flowing through the second passage 160. For example, during typical propulsion system operation, the airframe heat exchanger 120 may transfer at least some or all of the heat energy (received through one or more of the propulsion system heat exchangers 118) out of the FC working fluid and into the ambient air. The thermal management system 26 of FIG. 3 and its members may therefore be operated to cool the FC working fluid and thereby the respective aircraft propulsion system 24 and its various sub-systems; e.g., 126, 132, 138 and 144. The TMS fluid circuit 114 may thereby function as a thermal bus for rejecting at least some of the heat energy generated by operation of the respective aircraft propulsion system 24.

The fluid flow regulator 122 is configured to circulate and regulate a flow of the FC working fluid through the TMS fluid circuit 114. The fluid flow regulator 122, for example, may be configured as or otherwise include a fluid pump, a valve (or valve system) and/or a compressor. Note, where the fluid flow regulator 122 is or otherwise includes a compressor, it is contemplated the TMS fluid circuit 114 may be configured to facilitate a refrigeration cycle. The fluid flow regulator 122 may be arranged downstream from the airframe heat exchanger 120 and upstream of the propulsion system heat exchangers 118. Alternatively, the fluid flow regulator 122 may be arranged upstream from the airframe heat exchanger 120 and downstream of the propulsion system heat exchangers 118. Still alternatively, the fluid flow regulator 122 may be arranged inline between an adjacent pair of the propulsion system heat exchangers 118. Moreover, while the thermal management system 26 of FIG. 3 is shown with a single fluid flow regulator 122, it is contemplated the thermal management system 26 may alternatively include multiple fluid flow regulators at various locations along the TMS fluid circuit 114.

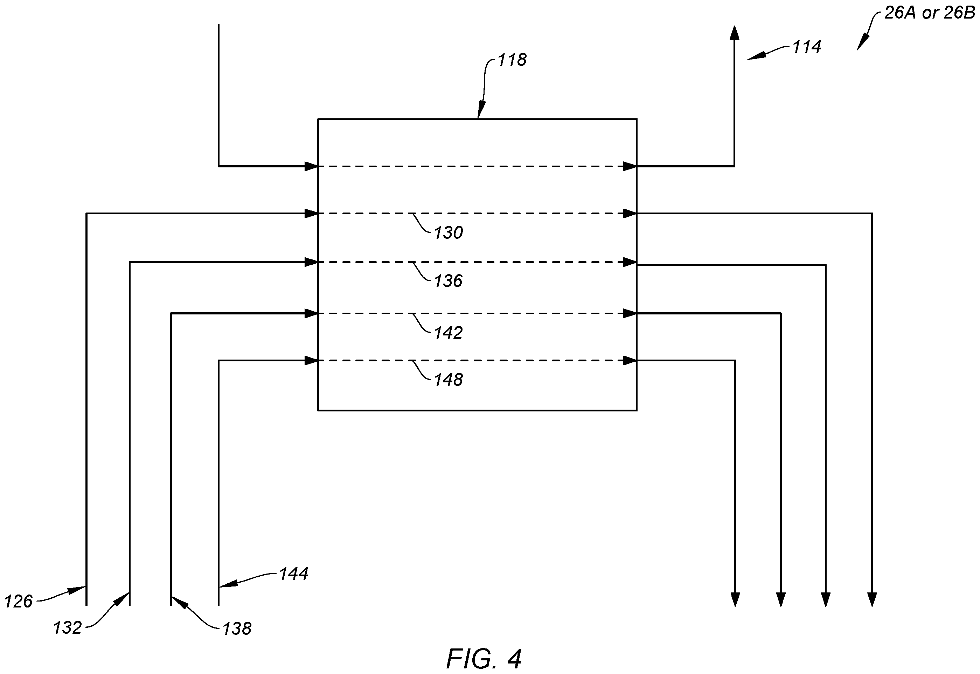

In some embodiments, referring to FIG. 3, each thermal management system 26 may be arranged with the respective propulsion system sub-systems (e.g., 126, 132, 138 and 144) thermally in series. In other embodiments, referring to FIG. 4, each thermal management system 26 may be arranged with the respective propulsion system sub-systems (e.g., 126, 132, 138 and 144) thermally in parallel. Some or all of the propulsion system heat exchangers 118 of FIG. 3, for example, may be configured into a single common propulsion system heat exchanger 118 as shown, for example, in FIG. 4. Of course, in still other embodiments, it is contemplated each thermal management system 26 may be arranged with some of the respective propulsion system sub-systems thermally in parallel while others of the respective propulsion system sub-systems are thermally in series.

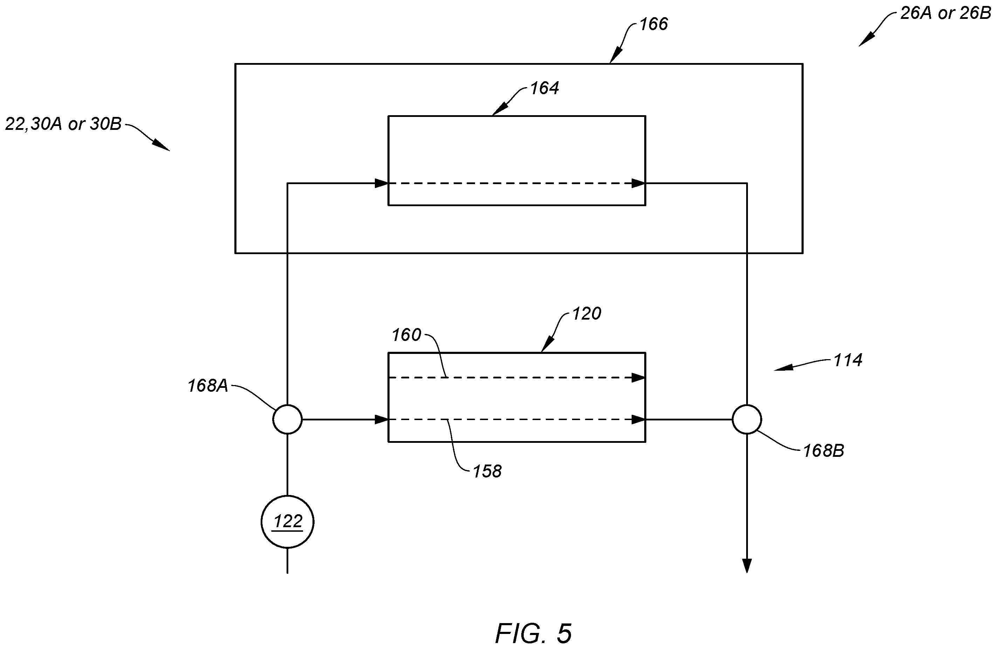

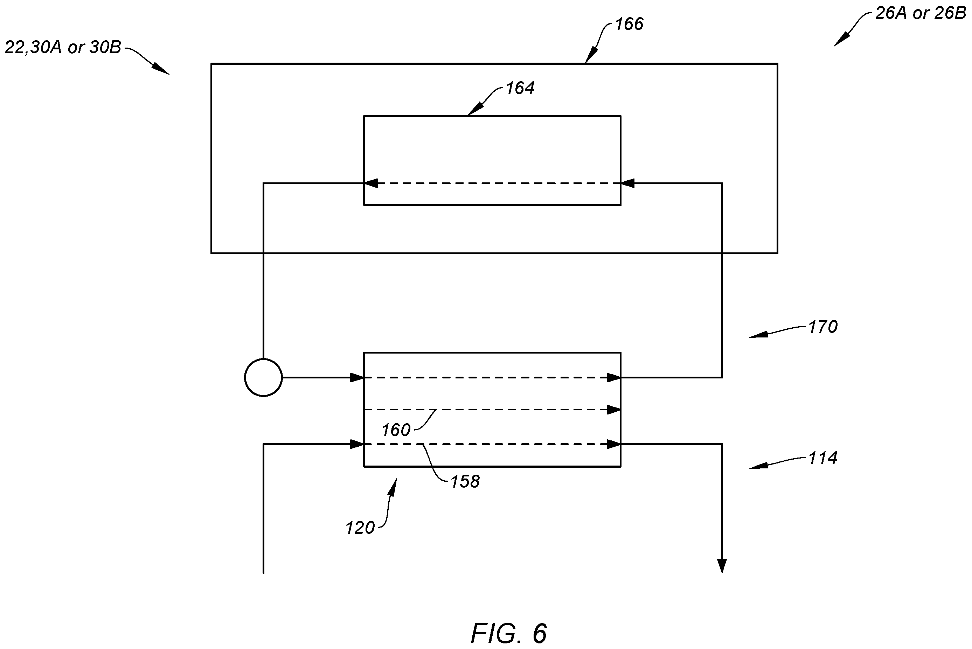

In some embodiments, referring to FIGS. 5 and 6, each thermal management system 26 may also (or alternatively) include a fuel heat exchanger 164. This fuel heat exchanger 164 may be disposed within and/or otherwise thermally coupled to a fuel reservoir 166 of a fuel system for the respective aircraft propulsion system 24 (see FIG. 2). This fuel reservoir 166 may be disposed in the aircraft airframe 22 and, more particularly, in the respective aircraft wing 30. With this arrangement, the fuel reservoir 166 may provide an additional heat sink for the thermal management system 26. In the arrangement of FIG. 5, the TMS fluid circuit 114 includes and extends through the fuel heat exchanger 164. Here, the TMS fluid circuit 114 may also include valving (e.g., valves 168A and 168B) such that: (a) a portion of the TMS fluid circuit 114 with the fuel heat exchanger 164 may be cutoff (e.g., bypassed) from the rest of the TMS fluid circuit 114; and/or (b) a portion of the TMS fluid circuit 114 with the airframe heat exchanger 120 may be cutoff from the rest of the TMS fluid circuit 114. By contrast, in the arrangement of FIG. 6, each thermal management system 26 includes a separate fuel circuit 170 which includes and extends through the airframe heat exchanger 120 and the fuel heat exchanger 164.

In some embodiments, referring to FIG. 1, each airframe heat exchanger 120 may be located substantially or completely between the respective aircraft propulsion system 24 and the aircraft fuselage 28 along the respective aircraft wing 30. In other embodiments, each aircraft propulsion system 24 may be located substantially or completely between the respective airframe heat exchanger 120 and the aircraft fuselage 28 along the respective aircraft wing 30.

In some embodiments, referring to FIG. 1, each propulsor rotor 68 may be disposed forward and upstream of the leading edge 46 of the respective aircraft wing 30. The present invention, however, is not limited to such an exemplary arrangement. For example, while the aircraft propulsion systems 24 are generally described above with a tractor configuration, it is contemplated the aircraft propulsion systems 24 may alternatively have a pusher configuration.

Referring to FIG. 2, the propulsion section 58 of each aircraft propulsion system 24 is described above with its single propulsor rotor 68 and its guide vane structure 96 for ease of description. However, it is contemplated each aircraft propulsion system 24 may alternatively be configured without a guide vane structure 96 and/or configured with multiple of the propulsor rotors; e.g., counter-rotating open propulsor rotors. The present invention therefore is not limited to any particular type or configuration of open aircraft propulsion system 24.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft (20), comprising:
an airframe (22);
an aircraft propulsion system (24A,24B) mounted to the airframe (22), the aircraft propulsion system (24A,24B) including an open propulsor rotor (68) and a turbine engine core (64) configured to drive rotation of the open propulsor rotor (68) about an axis (50); and
a thermal management system (26) including a fluid circuit (114) and a fluid circuit working fluid within the fluid circuit (114), the fluid circuit (114) including a propulsion system heat exchanger (118A, 118B, 118C, 118D) and an airframe heat exchanger (120), the propulsion system heat exchanger (118A... 118D) configured to transfer heat energy out of a propulsion system working fluid within the aircraft propulsion system (24A,24B) into the fluid circuit working fluid, and the airframe heat exchanger (120) configured to transfer at least some of the heat energy out of the fluid circuit working fluid into an airframe working fluid within the aircraft airframe (22).

2. The assembly of claim 1, wherein the fluid circuit working fluid is a non-flammable fluid.

3. The assembly of claim 1 or 2, wherein the airframe working fluid is a flammable fluid.

4. The assembly of any preceding claim, wherein the fluid circuit working fluid comprises a coolant.

5. The assembly of any preceding claim, wherein the fluid circuit working fluid comprises a lubricant.

6. The assembly of any preceding, wherein the propulsion system working fluid is a flammable fluid.

7. The assembly of any preceding claim, wherein:
the propulsion system working fluid comprises a lubricant and the propulsion system (24A,24B) further includes a lubrication system (126) configured to flow the lubricant; or
the propulsion system working fluid comprises an actuation fluid, the propulsion system (24A,24B) further includes an actuation system (145) configured to flow the actuation fluid, the actuation system (145) includes an actuator (147) adapted to receive the actuation fluid, and the actuator (147) is a fueldraulic actuator, a pneumatic actuator or a hydraulic actuator.

8. The assembly of any of claims 1 to 5, wherein:
the propulsion system working fluid comprises buffer air; and
the propulsion system (24A,24B) further includes a buffer air system (138) configured to flow the buffer air.

9. The assembly of any preceding claim, wherein:
the airframe working fluid comprises air and the airframe (22) comprises a duct (150) configured to direct ambient air received from outside of the airframe (22) across the airframe heat exchanger (120); or
the airframe working fluid comprises fuel; and the airframe (22) comprises a fuel reservoir (166) configured to contain the fuel, and the airframe heat exchanger (120) is thermally coupled to and/or disposed within the fuel reservoir (166).

10. The assembly of any preceding claim, wherein:
the airframe (22) comprises a or the fuel reservoir (166) configured to contain fuel;
the fluid circuit (114) is a first fluid circuit, the fluid circuit working fluid is a first fluid circuit working fluid, and the thermal management system (26) further includes an airframe fluid circuit (170) and the airframe working fluid within the airframe fluid circuit (170); and
the airframe fluid circuit (170) includes the airframe heat exchanger (120) and a fuel heat exchanger (164), the fuel heat exchanger (164) is thermally coupled to and/or disposed within the fuel reservoir (166), and the fuel heat exchanger (164) is configured to transfer at least some of the heat energy out of the airframe working fluid into the fuel within the fuel reservoir (166).

11. The assembly of any preceding claim, wherein:
the airframe (22) comprises an aircraft wing (30A,30B); and
the aircraft propulsion system (24A,24B) is mounted to the aircraft wing (30A,30B), optionally wherein:
the aircraft wing (30A,30B) extends between a leading edge (46A,46B) and a trailing edge (48A,48B); and
the open propulsor rotor (68) is disposed upstream of the leading edge (46A,46B).

12. The assembly of any preceding claim, wherein the propulsion system heat exchanger (118A) is a first propulsion system heat exchanger (118A), the propulsion system working fluid is a first propulsion system working fluid, and the fluid circuit (114) further includes a second propulsion system heat exchanger (118B), and the second propulsion system heat exchanger is configured to transfer additional heat energy out of a second propulsion system working fluid within the aircraft propulsion system (24A,24B) into the fluid circuit working fluid.

13. The assembly of any preceding claim, wherein:
the propulsion system working fluid is a first propulsion system working fluid; and
the propulsion system heat exchanger (118A... 118D) is configured to transfer additional heat energy out of a second propulsion system working fluid within the aircraft propulsion system (24A,24B) into the fluid circuit working fluid.

14. The assembly of any preceding claim, wherein:
the aircraft propulsion system (24A,24B) extends axially between a forward, upstream end (52) and an aft, downstream end (54); and
the open propulsor rotor (68) is disposed axially between the forward, upstream end (52) and the turbine engine core (64).

15. The assembly of any preceding claim, wherein the engine core (64) includes a flowpath (100), a compressor section (59), a combustor section (60), a turbine section (61) and a rotating structure (80), the flowpath extends through the compressor section (59), the combustor section (60) and the turbine section (61) from an inlet into the flowpath (100) to an exhaust from the flowpath (100), the rotating structure (80) includes a compressor rotor (69) in the compressor section (59) and a turbine rotor (72) in the turbine section (61), and the rotating structure (80) is configured to rotate about the axis (50) and drive rotation of the open propulsor rotor (68).
